# EUROPEAN PATENT SPECIFICATION

(11) **EP 2 572 050 B1**
(45) Date of publication and mention of the grant of the patent: **25.12.2013**
(21) Application number: 10720671.6
(22) Date of filing: 19.05.2010
(51) Int. Cl.: E03C 1/06, F16B 7/04, G05G 1/06

(54) **SHOWER RAIL RISER**
VERSTELLBARER HALTER FÜR DUSCHSTANGEN
MONTANT DE RAIL DE DOUCHE

(43) Date of publication of application: 27.03.2013
(73) Proprietor: DLP Limited, Douglas, Isel of Man IM2 4RW (GB)
(72) Inventor: FELMERI, Ian Douglas, Castletown, Isle of Man IM9 1BD (GB)
(74) Representative: Hocking, Adrian Niall
(86) International application number: PCT/GB2010/050820
(87) International publication number: WO 2011/144886

(56) References cited:
- DE-U- 1 831 193
- GB-A- 2 443 704

## Description

The present invention relates to a shower rail riser, and more particularly but not necessarily exclusively to a riser for releasably holding a shower head.

A shower rail which slidably supports a riser on which a shower head is disengagably held is known and widely used in many shower installations. The shower rail is typically fastened to a wall surface within the showering area, and the shower head riser is slidably received thereon. A clamp is utilised to hold the riser in place, and by releasing the clamp the riser can be more easily slid to a different position on the rail, thereby adjusting a position of the shower head held by the riser.

In GB-A- 2443704 is disclosed a shower rail riser according to the preamble of claim 1.

However, the rail is typically installed at a height suitable for an able-bodied standing person, and this causes difficulties for an infirm or disabled person who must be seated whilst showering. The seating may be in the form of a shower chair or wheelchair.

When in a seated condition, the user thus often finds it difficult to reach the riser, and then even if reached, may find it very difficult without standing up to adjust the riser on the rail particularly in an upwards direction.

The present invention seeks to provide a solution to these problems.

According to the present invention, there is provided a shower rail riser comprising a riser body having an aperture for receiving a riser rail therethrough, a holder for releasably holding a shower head, an engagement element for in use releasably engaging a riser rail extending through the aperture of the riser body so as to hold the riser body stationary relative thereto, and a handle which is movable relative to the riser body so that a user can at least raise the riser body using the handle, characterised in that the handle is pivotably mounted on and connected to the riser body via a universal joint so as to depend from the riser body.

Preferable and/or optional features of the invention are set forth in claims 2 to 9, inclusive.

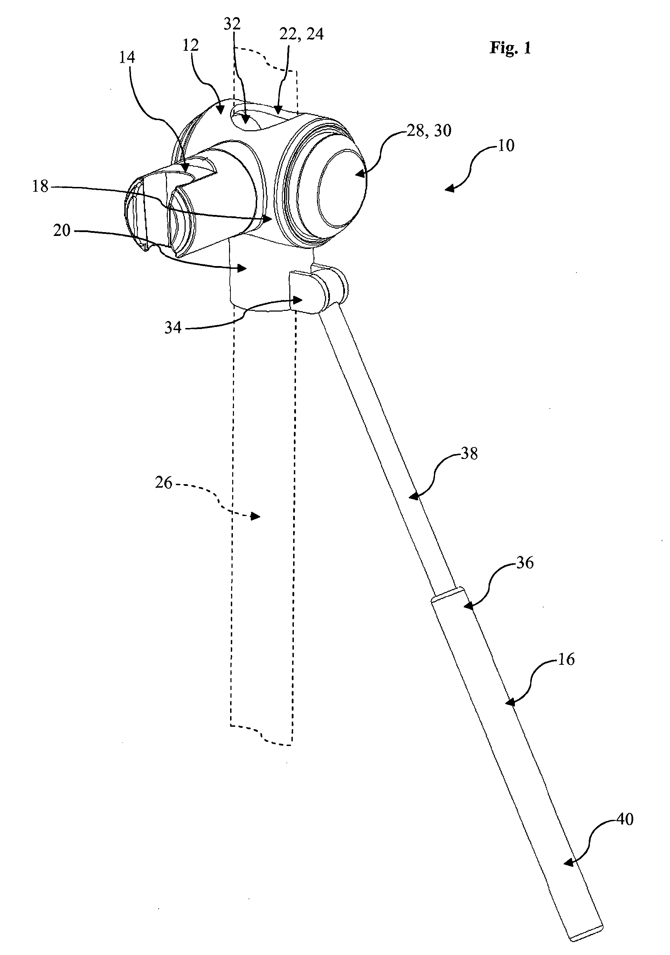

The invention will now be more particularly described, by way of example only, with reference to the accompanying drawing, in which Figure 1 shows a perspective view of one embodiment of a shower rail riser, in accordance with the invention and with a shower riser rail shown in phantom for clarity.

Referring to the drawing, there is shown one embodiment of a shower rail riser 10 which comprises a riser body 12, a holder 14 typically for receiving a ferrule of a shower head as a releasable taper fit, and a handle 16 which depends from the riser body 12.

The riser body 12 is preferably formed from moulded plastics and, in this embodiment, has a generally cylindrical support portion 18 and depending tail portion 20. A rail aperture 22 extends centrally through the support portion 18 and the tail portion 20 and at right angles to the axial extent of the support portion 18. The rail aperture 22 has an opening 24 dimensioned to slidably receive a standard riser rail 26 as a close fit. Other shapes besides cylindrical can be considered.

The riser body 12 also includes an engagement mechanism 28 which frictionally engages the riser rail 26 to prevent or limit unintentional movement along the riser rail 26 and to hold it stationary or substantially stationary relative thereto.

The engagement mechanism 28, in this case, utilises a large spring-biased release button 30 at one axial end of the cylindrical support portion 18, and a friction element 32, in this case being a strip which passes around the rail aperture 22 internally within the riser body 12. The release button 30 protrudes from one end of the support portion 18, and has a diameter which approaches an outer diameter of the cylindrical support portion 18. In use, the spring-biasing of the release button 30 pulls the friction strip into engagement with a surface of the riser rail 26 passing through the rail aperture 22. Pressing the release button 30 releases the engagement of the friction strip, thereby allowing the riser body 12 to be moved relative to the riser rail 26.

Other engagement means or elements may be considered instead of the engagement mechanism 28 described above, and for example, a rotatable actuating or release element can be used in place of the spring-biased release button 30.

The holder 14, which is also preferably plastics, is pivotably mounted at one side of the support portion 18, and in this case midway or substantially midway along the axial extent of the support portion 18 so as to be substantially coplanar with the rail aperture 22. The pivot axis extends at right angles or substantially right angles to the axis of the rail aperture 22. This arrangement provides for a compact design of riser body 12. However, the holder 14 could be offset relative to the rail aperture 22. Although specifically designed to releasably hold a shower head, it may also accommodate connection of an adapter for other showering accessories, such as a soap dish. Therefore, the holder may not be solely for use with a shower head.

The handle 16 is pivotably connected to the tail portion 20 of the riser body 12 via a hinge 34 mounted to the exterior surface thereof A pivot axis of the hinge 34 is parallel with a rotational axis of the holder 14 and extends laterally to the axis of the aperture 22.

In this embodiment, the handle 16 includes a two-part telescopic shaft 36 having a proximal connector part 38 which meets the hinge 34, and a distal grip part 40. The proximal connector part 38 is thus slidable within the distal grip part 40. The distal grip part 40 of the shaft 36 is rotatable to lock an extension of the distal grip part 40 relative to the proximal connector part 38.

The distal grip part 40, although shown as being rectilinear, may have a different shape and/or may include a moulded grip to facilitate use by an elderly or infirm user. Similarly, the proximal connector part 38 is rectilinear, but could potentially be arcuate or include an arcuate portion along its longitudinal extent.

The hinge 34 enables pivoting in a single substantially vertical plane. However, it is possible to consider utilising a universal joint as the hinge to enable pivoting in all or substantially all directions.

Furthermore, although rigid, the handle 16 or shaft 36 of the handle 16 could be flexible or in part flexible, either by the use of dense rubber or a wire coil. To this end, the hinge 34 may be dispensed with. Additionally, the shaft 36 may not be telescopic.

Although preferably telescopic to enable reach adjustment for the user, the handle 16 could be foldable with one or more lockable joints to set a user-adjustable length.

The connection of the handle 16 to the riser body 12 is advantageous because the tail portion 20 is narrower than the support portion 18, thereby allowing the point of connection to be closer to the riser rail 26. This is beneficial in preventing or limiting a turning moment imparted to the riser body 12 via the handle 16 and thus possible binding of the riser body 12 when being pushed or pulled along the riser rail 26. However, it is feasible that the tail portion 20 could be dispensed with and that the handle 16 could be connected to the support portion 18, for example, at the end opposite the release button 30.

In use, the handle 16 is utilised by a user, for example, being seated, to force the riser body 12 along the riser rail 26 or to angularly adjust the riser body 12 relative to the riser rail 26 whilst the engagement mechanism 28 may still be engaged and thus against the force imparted to the riser rail 26 by the friction strip. This dispenses with the need of a user to simultaneously press the release button.

In a modification to the first embodiment, the above described engagement mechanism may be dispensed with and an engagement element can be utilised at the hinge of the handle. In this case, the engagement element may be a cam formation provided on the proximal connector part of the handle and at the hinge. By providing an access opening in the tail portion of the riser body at the hinge, the cam formation can directly frictionally engage the riser rail when the handle is hanging straight down in its normal at rest condition. Once the handle is raised by a user desiring to move the riser body along the riser rail, the pivoting of the handle rotates the cam formation out of engagement with the riser rail, thereby disengaging the riser body and allowing for substantially unrestricted slidable movement. To this end, the riser body may be reshaped, whereby the spring-biased engagement mechanism is dispensed with and a unitary riser body is utilised instead of having a distinct support portion and tail portion. Consequently, the riser body may potentially be made much narrower overall.

It is thus possible to provide a simple and cost-effective shower rail riser which can be easily utilised by an elderly or infirm user with any standard shower rail. The riser is especially beneficial if the user must be seated when showering, although it would also be of benefit for a more able-bodied user who can stand but who perhaps has limited articulation in their shoulder. A reach-adjustable handle enables most if not all likely seating distances to be accommodated.

The embodiments described above are provided by way of examples only, and various other modifications will be apparent to persons skilled in the art without departing from the scope of the invention as defined by the appended claims.

## Claims

1. A shower rail riser (10) comprising a riser body (12) having an aperture (22) for receiving a riser rail (26) therethrough, a holder (14) for releasably holding a shower head, an engagement element (28) for in use releasably engaging a riser rail (26) extending through the aperture (22) of the riser body (12) so as to hold the riser body (12) stationary relative thereto, and a handle (16) which is movable relative to the riser body (12) so that a user can at least raise the riser body (12) using the handle (16), **characterised in that** the handle (16) is pivotably mounted on and connected to the riser body (12) via a universal joint so as to depend from the riser body (12).

2. A shower rail riser as claimed in claim 1, wherein a shaft (36) of the handle (16) is telescopic.

3. A shower rail riser as claimed in claim 1, wherein a shaft of the handle is flexible.

4. A shower rail riser as claimed in claim 1, wherein the handle (16) has a foldably adjustable length.

5. A shower rail riser as claimed in any one of the preceding claims, wherein the engagement element (28) includes a friction member for in use frictionally engaging a riser rail (26), and a user-operable release member (30) for releasing the friction member.

6. A shower rail riser as claimed in any one of the preceding claims, wherein the engagement element (28) is incorporated at a pivot of the handle (16), and includes a cam element which is operable by movement of the handle (16) for in use releasably engaging the riser rail (26).

7. A shower rail riser as claimed in any one of the preceding claims, wherein the riser body (12) includes a support portion (18) on which the holder (14) is mounted, and a depending tail portion (20) on which the handle (16) is mounted.

8. A shower rail riser as claimed in claim 7, wherein the support portion (18) overhangs the tail portion (20).

9. A shower rail riser as claimed in any one of the preceding claims, wherein the holder (14) is rotatably mounted on the riser body (12).

## Patentansprüche

1. Ein verstellbarer Halter für Duschstangen (10), umfassend einen Körper des verstellbaren Halters (12) mit einer Öffnung (22) zum Aufnehmen einer Stange des verstellbaren Halters (26) durch diese, eine Halterung (14) zum lösbaren Halten eines Duschkopfes, ein Festziehelement (28), um beim Gebrauch eine Stange des verstellbaren Halters (26) lösbar festzuziehen, die sich durch die Öffnung (22) des Körpers des verstellbaren Halters (12) erstreckt, damit der Körper des verstellbaren Halters (12) relativ dazu stationär gehalten wird, und einen Stiel (16), der relativ zum Körper des verstellbaren Halters (12) bewegbar ist, damit ein Benutzer den Körper des verstellbaren Halters (12) unter Verwendung des Stiels (16) zumindest hochziehen kann, **dadurch gekennzeichnet, dass** der Stiel (16) am Körper des verstellbaren Halters (12) über ein Universalgelenk drehbar montiert und damit verbunden ist, um vom Körper des verstellbaren Halters (12) herabzuhängen.

2. Ein verstellbarer Halter für Duschstangen nach Anspruch 1, wobei ein Schaft (36) des Stiels (16) teleskopisch ist.

3. Ein verstellbarer Halter für Duschstangen nach Anspruch 1, wobei ein Schaft des Stiels flexibel ist.

4. Ein verstellbarer Halter für Duschstangen nach Anspruch 1, wobei der Stiel (16) eine faltbar einstellbare Länge aufweist.

5. Ein verstellbarer Halter für Duschstangen nach einem der vorstehenden Ansprüche, wobei das Festziehelement (28) ein Reibungselement, um beim Gebrauch eine Stange des verstellbaren Halters (26) reibschlüssig festzuziehen, und ein vom Benutzer bedienbares Löseelement (30) zum Lösen des Reibungselements umfasst.

6. Ein verstellbarer Halter für Duschstangen nach einem der vorstehenden Ansprüche, wobei das Festziehelement (28) an einem Drehpunkt des Stiels (16) eingebaut ist und ein Nockenelement umfasst, das durch Bewegung des Stiels (16) bedienbar ist, um beim Gebrauch die Stange des verstellbaren Halters (26) lösbar festzuziehen.

7. Ein verstellbarer Halter für Duschstangen nach einem der vorstehenden Ansprüche, wobei der Körper des verstellbaren Halters (12) einen Trägerabschnitt (18), an dem die Halterung (14) montiert ist, und einen herabhängenden Schwanzabschnitt (20) umfasst, an dem der Stiel (16) montiert ist.

8. Ein verstellbarer Halter für Duschstangen nach Anspruch 7, wobei der Trägerabschnitt (18) den Schwanzabschnitt (20) überragt.

9. Ein verstellbarer Halter für Duschstangen nach einem der vorstehenden Ansprüche, wobei die Halterung (14) am Körper des verstellbaren Halters (12) drehbar montiert ist.

## Revendications

1. Curseur de barre de douche (10) comprenant un corps de curseur (12) ayant une ouverture (22) pour recevoir une barre de curseur (26) à travers celle-ci, un support (14) pour maintenir de façon libérable une pomme de douche, un élément d'engagement (28) pour, en utilisation, engager de façon libérable une barre de curseur (26) s'étendant à travers l'ouverture (22) du corps de curseur (12) de façon à maintenir le corps de curseur (12) fixe par rapport à celle-ci, et une poignée (16) qui est mobile par rapport au corps de curseur (12) de telle sorte qu'un utilisateur peut au moins élever le corps de curseur (12) à l'aide de la poignée (16), **caractérisé par le fait que** la poignée (16) est montée de façon pivotante sur et reliée au corps de curseur (16) par l'intermédiaire d'un joint universel de façon à pendre à partir du corps de curseur (12).

2. Curseur de barre de douche selon la revendication 1, dans lequel une tige (36) de la poignée (16) est télescopique.

3. Curseur de barre de douche selon la revendication 1, dans lequel une tige de la poignée est souple.

4. Curseur de barre de douche selon la revendication 1, dans lequel la poignée (16) a une longueur ajustable par pliage.

5. Curseur de barre de douche selon l'une quelconque des revendications précédentes, dans lequel l'élément d'engagement (28) comprend un élément de frottement pour, en utilisation, engager à frottement une barre de curseur (26), et un élément de libération (30) actionnable par l'utilisateur pour libérer l'élément de frottement.

6. Curseur de barre de douche selon l'une quelconque des revendications précédentes, dans lequel l'élément d'engagement (28) est incorporé au niveau d'un pivot de la poignée (16) et comprend un élément came qui est actionnable par mouvement de la poignée (16) pour, en utilisation, engager de façon libérable la barre de curseur (26).

7. Curseur de barre de douche selon l'une quelconque des revendications précédentes, dans lequel le corps de curseur (12) comprend une partie de support (18) sur laquelle est monté le support (14) et une partie queue pendante (20) sur laquelle est montée la poignée (16).

8. Curseur de barre de douche selon la revendication 7, dans lequel la partie support (18) surplombe la partie queue (20).

9. Curseur de barre de douche selon l'une quelconque des revendications précédentes, dans lequel le support (14) est monté de façon rotative sur le corps de curseur (12).
